# EUROPÄISCHE PATENTSCHRIFT

(11) **EP 4 450 326 B1**
(45) Veröffentlichungstag und Bekanntmachung des Hinweises auf die Patenterteilung: **18.02.2026**
(21) Anmeldenummer: 23169063.7
(22) Anmeldetag: 20.04.2023
(51) Int. Cl.: B60N 2/06, F16H 25/18, F16H 25/02

(54) **LINEARANTRIEB, LÄNGSVERSTELLEINHEIT MIT EINEM SOLCHEN LINEARANTRIEB**
LINEAR DRIVE, LONGITUDINAL ADJUSTMENT UNIT WITH SUCH A LINEAR DRIVE
ENTRAÎNEMENT LINÉAIRE, UNITÉ DE RÉGLAGE LONGITUDINAL DOTÉE D'UN TEL ENTRAÎNEMENT LINÉAIRE

(43) Veröffentlichungstag der Anmeldung: 23.10.2024
(73) Patentinhaber: IMS Gear SE & Co. KGaA, 78166 Donaueschingen (DE)
(72) Erfinder: Werschler, Marco, 78315 Radolfzell am Bodensee (DE); Mittelbach, Marcel, 79859 Schluchsee (DE); Nietzel, Kenny, 78054 Villingen-Schwenningen (DE)
(74) Vertreter: Westphal, Mussgnug & Partner Patentanwälte mbB

(56) Entgegenhaltungen:
- WO-A1-2020/245255
- JP-A- 2022 143 776
- JP-U- H0 684 054

## Beschreibung

Die vorliegende Erfindung betrifft einen Linearantrieb mit den Merkmalen des Anspruchs 1, eine Längsverstelleinheit für einen Sitz mit den Merkmalen des Anspruchs 14 und ein Kraftfahrzeug mit den Merkmalen des Anspruchs 15.

Linearantriebe sind aus dem Stand der Technik in unterschiedlichen Ausgestaltungen vorbekannt und werden verbreitet als Längsverstelleinheiten zum Verstellen der Position eines Sitzes in Kraftfahrzeugen verwendet. Längsverstelleinheiten wirken typischerweise mit einer an einem Chassis festgelegten Unterschiene und einer innerhalb dieser angeordneten Oberschiene zusammen, wobei die Oberschiene durch die Längsverstelleinheit motorisch verfahrbar ist und mit dem Sitz gekoppelt ist. Das Verstellen der Oberschiene durch die Längsverstelleinheit erfolgt im Stand der Technik typischer Weise mittels einer Spindel, welche innerhalb der Oberschiene angeordnet ist und an ihrem jeweiligen ersten Ende und zweiten Ende abgestützt ist. Derartige Längsverstelleinheiten sind beispielsweise aus der DE 36 40 197 A1, DE 42 08 948 C2, DE 196 42 655 C2, DE 198 15 283 A1, DE 10 2004 013 009 A1, JP 2022 143776 A, WO 2020 245 255 A1, JP H06 84054 U und DE 10 2006 052 936 A1 bekannt. Aufgrund der hohen Anforderungen an einen Linearantrieb, welcher neben der Verstellfunktion als Längsverstelleinheit auch eine Unfallsicherheit gewährleisten muss, weisen derartige Linearantriebe unterschiedliche Bauformen auf, die unterschiedliche Fertigungsmethoden und Verfahren erfordern.

Nachteiliger Weise hat sich gezeigt, dass eine spielfreie Linearbewegung nur mit hohem Aufwand zu realisieren ist und dass Bruchlasten solcher Linearantriebe nur mit erheblichem Aufwand anzupassen sind. Ferner sind bekannte Längsverstelleinheiten nur bedingt bei der Realisierung neuartiger Sitzkonzepte in Fahrzeugen verwendbar. Ferner hat sich gezeigt, dass aufgrund von Verschleiß die Spielfreiheit der Linearantriebe verloren geht.

Hier setzt die vorliegende Erfindung an.

Der Erfindung liegt die Aufgabe zugrunde, einen verbesserten Linearantrieb vorzuschlagen, der in zweckmäßiger Weise die aus dem Stand der Technik bekannten Nachteile beseitigt. Weiterhin soll bevorzugt ein Linearantrieb mit einer besonders kompakten Bauweise angegeben werden, welcher insbesondere eine leichtgängige und nahezu spielfreie Linearbewegung bei gleichzeitiger variabler und anpassbarer Bruchlast ermöglicht. Darüber hinaus sollte der vorzuschlagende Linearantrieb eine hohe Verstellgeschwindigkeit realisieren können und ein verbessertes Verschleißverhalten aufweisen.

Diese Aufgaben werden durch einen Linearantrieb mit den Merkmalen des Anspruchs 1, eine Längsverstelleinheit mit den Merkmalen des Patentanspruchs 14 sowie mit einem Kraftfahrzeug mit den Merkmalen des Patentanspruchs 15 gelöst.

Der erfindungsgemäße Linearantrieb weist mindestens eine entlang einer Längsachse orientierte Zahnstange, mindestens zwei Schieber, die quer zu der Längsachse beweglich sind, und eine Antriebswelle auf. Die mindestens zwei Schieber sind dabei derart mit der Antriebswelle gekoppelt, dass die mindestens zwei Schieber jeweils mindestens eine zyklische und zueinander phasenversetzte Bewegung im Verlauf einer Umdrehung der Antriebswelle vornehmen und sich dabei durch einen Wirkkontakt mit der mindestens einen Zahnstange an der mindestens einen Zahnstange zum Erzeugen eines Vortriebs in eine Richtung der Längsachse abschieben. Erfindungsgemäß ist darüber hinaus vorgesehen, dass der Linearantrieb mindestens ein Kompensationsmittel aufweist, durch welches der Wirkkontakt zwischen mindestens einem der mindestens zwei Schieber und der mindestens einen Zahnstange gefedert oder vorgespannt ist.

Die vorliegende Erfindung beruht auf der Idee, einen Linearantrieb vorzuschlagen, der mindestens ein Kompensationsmittel aufweist, durch welches Toleranzen und/oder Verschleiß ausgeglichen werden kann. Das mindestens eine Kompensationsmittel ist dabei derart ausgestaltet, dass der Wirkkontakt zwischen mindestens einem der mindestens zwei Schieber und der mindestens einen Zahnstange gefedert, insbesondere vorgespannt, ist. Bei vorhandenen Toleranzen und/oder Verschleiß können bzw. kann durch das mindestens eine Kompensationsmittel die mindestens eine Zahnstange und/oder mindestens einer der mindestens zwei Schieber eine Ausgleichsbewegung vornehmen. Durch das Kompensationsmittel kann somit ein näherungsweise spielfreier Linearantrieb geschaffen werden, der vorzugsweise darüber hinaus besonders leichtgängig und geräuscharm ist und ferner bevorzugt eine lange Lebensdauer aufweist.

Eine Weiterbildung der vorliegenden Erfindung sieht vor, dass das mindestens eine Kompensationsmittel mindestens einen der mindestens zwei Schieber und/oder die mindestens eine Zahnstange in einer Querachse, die im Wesentlichen quer zur Längsachse orientiert ist, federt, insbesondere vorspannt. Beispielsweise kann durch die Vorspannung der mindestens einen Zahnstange quer zu der Längsachse die mindestens eine Zahnstange eine, vorzugsweise durch Anschläge mindestens einseitig begrenzte, Verschiebung erfahren, durch welche ein mögliches Spiel aufgrund Toleranzen und/oder Verschleiß ausgeglichen werden kann. Anders ausgedrückt kann die mindestens eine Zahnstange entgegen der zyklischen Bewegung des mindestens einen der mindestens zwei Schieber die Ausgleichbewegung vornehmen.

Gemäß der vorliegenden Erfindung sind mindestens zwei Zahnstangen vorgesehen. Die mindestens zwei Zahnstangen können beispielsweise auf jeweils einer eigenen Schiene oder auf einer gemeinsamen Schiene angeordnet sein.

Darüber hinaus sind die mindestens zwei Zahnstangen derart gegenüberliegend angeordnet sind, dass zwischen den mindestens zwei Zahnstangen eine Kulisse gebildet ist. In diese Kulisse kann mindestens einer der mindestens zwei Schieber eingreifen und im Verlauf der zyklischen Bewegung sich abwechselnd an den zwei gegenüberliegend angeordneten Zahnstangen abschieben. Die Kulisse kann somit nach Art einer wellenförmigen oder zick-zack-förmigen Nut entlang der Längsachse ausgebildet sein und umfasst zwei gegenüberliegende Profilflächen, welche durch die gegenüberliegenden zwei Zahnstangen bereitgestellt werden.

Die zwei gegenüberliegenden Profilflächen können eine beliebige Anzahl von Zähnen aufweisen, die jeweils aus einer ansteigenden und abfallenden Zahnflanke gebildet sind, wobei der Punkt oder Abschnitt zwischen zwei benachbarten Zahnflanken hier als Übergang bezeichnet wird. Bevorzugt sind die Übergänge von zwei gegenüberliegenden Profilflächen einer Kulisse näherungsweise quer zu der Längsachse in einer Flucht angeordnet.

Nach Maßgabe einer bevorzugten Weiterbildung wird mindestens eine der mindestens zwei Zahnstangen gegen die jeweils andere und gegenüber angeordnete der mindestens zwei Zahnstangen durch das mindestens eine Kompensationsmittel vorgespannt. Bevorzugt ist nur eine der zwei gegenüberliegend angeordneten Zahnstangen gegenüber der andere der zwei Zahnstangen fest montiert, währenddessen die eine der zwei Zahnstangen durch das mindestens eine Kompensationsmittel eine Ausgleichsbewegung vornehmen kann. Der mindestens eine der mindestens zwei Schieber, der in die Kulisse eingreift, wird zwischen den zwei Zahnstangen fixiert und ein Spiel, beispielsweise aufgrund Toleranzen oder Verschleiß, kann ausgeglichen werden.

Eine Weiterbildung der vorliegenden Erfindung sieht vor, dass der mindestens eine Schieber mindestens einen Pin umfasst. Bevorzugt steht der mindestens eine Schieber über den mindestens einen Pin in Wirkkontakt mit der mindestens einen Zahnstange. Der mindestens eine Pin kann bevorzugt integral mit einem Schieberkörper ausgebildet sein oder an dem Schieberkörper befestigt sein. Beispielsweise kann der mindestens eine Pin in eine Aufnahme des Schieberkörpers eingesteckt, bzw. eingepresst sein.

Der mindestens eine Pin kann beispielsweise nach Art eines Zahns ausgebildet sein, dessen Form mit dem Profil der mindestens einen Zahnstange korrespondiert. Ein solcher Zahn ist beispielsweise vorteilhaft, zur Bildung eines Flächenkontakts zwischen dem mindestens einen Schieber und der mindestens einen Zahnstange. Alternativ kann der Pin ebenfalls auch im Querschnitt rund, polygonförmig oder dergleichen sein.

Eine Weiterbildung der vorliegenden Erfindung sieht vor, dass der mindestens eine Pin in jeweils einer Pinachse in die Führungskulisse ragt und zwischen den zwei gegenüberliegend angeordneten Zahnstangen, vorzugsweise in der Längsachse, in der Kulisse festgelegt ist. Dazu liegt die jeweilige Pinachse vorzugsweise in Ausrichtung eines Normalverktors einer Schienenebene orientiert, die durch die Längsachse und die Richtung der zyklischen Bewegung aufgespannt wird.

Eine bevorzugte Weiterbildung der vorliegenden Erfindung sieht vor, dass der mindestens eine Pin mittels des mindestens einen Kompensationsmittels in einer Ebene quer zu der zyklischen Bewegung mindestens einen der mindestens zwei Schieber vorgespannt wird, und/oder dass der mindestens eine Pin durch das mindestens eine Kompensationsmittel in der Pinachse vorgespannt ist. Durch das Kompensationsmittel wird der Wirkkontakt zwischen dem Schieber und der jeweiligen Zahnstange vorgespannt.

Gemäß der vorliegenden Erfindung weist die Kulisse zwei gegenüberliegende und zusammenlaufende Profilflächen auf. Mit anderen Worten ausgedrückt, weist die nutförmig ausgebildete Kulisse keine konstante Breite auf, sondern die Breite der Kulisse nimmt entweder in der Orientierung der Pinachse zu und/oder ab.

Darüber hinaus hat es sich als vorteilhaft erwiesen, wenn der mindestens eine Pin eine mit den zulaufenden Profilflächen korrespondierende Form aufweist. Beispielsweise kann der mindestens eine Pin zumindest abschnittsweise pyramidenförmig und/oder konisch ausgebildet sein, wodurch der mindestens eine Pin entlang der Pinachse mit der jeweiligen Zahnstange in Wirkkontakt steht, wobei der Wirkkontakt vorzugsweise ein Linien- oder noch weiter bevorzugt ein Flächenkontakt ist.

Durch eine Vorspannung des mindestens einen Pins durch das mindestens eine Kompensationsmittel wird der Wirkkontakt zwischen dem mindestens einen Pin und dem mindestens einen Zahnprofil vorgespannt. Durch die Vorspannung wird beispielsweise bei Verschleiß der jeweilige mindestens eine Pin durch das Kompensationsmittel entlang der Pinachse verschoben, wodurch Verschleiß und/oder möglicherweise auch Toleranzen ausgeglichen werden können bzw. kann. Nach Maßgabe einer Weiterbildung der vorliegenden Erfindung wird der mindestens eine Pin aus mindestens zwei Einzelpins gebildet, die in einer gemeinsamen Ebene senkrecht zu der Längsachse angeordnet sind. Zwei Einzelpins werden auch im Zusammenhang mit dieser Erfindung als Einzelpinpaar beschrieben. Die mindestens zwei Einzelpins stehen vorzugsweise während einer zyklischen Bewegung abwechselnd in Wirkkontakt mit der jeweiligen Zahnstange. Gemäß einer bevorzugten Ausgestaltung weisen die Einzelpins eine gemeinsame und noch weiter bevorzugt integral ausgebildete Basis auf, wobei die Basis beispielsweise auch durch den Schieberkörper gebildet sein kann. Die beiden Einzelpins haben eine geringere Steifigkeit als ein Pin und können insbesondere durch elastische Verformungen Toleranzen und/oder Verschleiß durch eine Verformung, insbesondere eine elastische Verformung, kompensieren.

Eine bevorzugte Weiterbildung der vorliegenden Erfindung sieht vor, dass zwischen mindestens zwei Einzelpins oder einem Einzelpinpaar das mindestens eine Kompensationsmittel angeordnet ist, dass die mindestens zwei Einzelpins vorspannt.

Weiterhin sieht eine Weiterbildung der vorliegenden Erfindung vor, dass der mindestens eine Pin eine Ummantelung und einen Pinkörper umfasst. Zwischen der Ummantelung und dem Pinkörper ist gemäß einer vorteilhaften Weiterbildung der vorliegenden Erfindung das mindestens eine Kompensationsmittel angeordnet. Bevorzugt sind zwischen der Ummantelung und dem Pinkörper mehrere Kompensationsmittel, bevorzugt umfangssymmetrisch, angeordnet, wobei die Kompensationsmittel eine elastische Verschiebung der Ummantelung gegenüber dem Pinkörper ermöglichen. Dadurch ist beispielsweise eine Kompensation von Toleranzen und/oder Verschleiß möglich.

Auch sieht eine Weiterbildung der vorliegenden Erfindung vor, dass die Ummantelung drehfest an dem - vorzugsweise zylinderförmig ausgebildeten - Pinkörper gehalten wird. Bevorzugt ist die Ummantelung rautenförmig und die Kompensationsmittel sind entweder in den Eckbereichen der Raute angeordnet oder vorzugsweise an Seitenkanten. Um eine Verdrehung der Ummantelung gegenüber dem Pinkörper zu verhindern, kann der Pinkörper mindestens eine abstehende Rippe aufweisen, die einer formschlüssigen Übertragung von Drehmomente zwischen dem Pinkörper und Kompensationsmittel dient. Die Ummantelung kann somit nicht nur in einer Ebene senkrecht zur Pinachse eine Kompensationsbewegung vornehmen, sondern ebenso eine Torsionsbewegung.

Darüber hinaus hat es sich als vorteilhaft erwiesen, wenn mehrere Zahnstangen entlang der Längsachse aneinandergereiht angeordnet sind, wodurch ein Verfahrweg entlang der Längsachse für den Linearantrieb beliebig verlängert werden kann. Bevorzugt können die entlang der Längsachse aneinandergereihten Zahnstangen formschlüssig miteinander verbunden werden. Beispielsweise können die entlang der Längsachse aneinandergereihten Zahnstangen nach Art einer Schwalbenschwanzverbindung formschlüssig verbunden sein. Auch kann ein Kupplungsstück vorgesehen sein, das in der Längsachse zwei benachbarte Zahnstangen miteinander verbindet. Beispielsweise kann das Kupplungsstück durch ein Kompensationsmittel gebildet sein, wobei das Kupplungsstück beispielsweise aus einem elastischen Polymer, Gummi oder einem weichelastischen Metall hergestellt werden kann. Um den Ausgleich von etwaigen Toleranzen und oder von Verschleiß aufzuweichen, kann die jeweilige mindestens eine Zahnstange in der Längsachse geringfügig beweglich sein.

Eine Weiterbildung der vorliegenden Erfindung sieht vor, dass der Wirkkontakt zwischen der mindestens einen Zahnstange und mindestens einem der mindestens zwei Schieber ein Flächenkontakt, ein Linienkontakt oder ein Funkkontakt ist. Der Flächenkontakt wird beispielsweise dadurch bewerkstelligt, dass der Schieber zumindest abschnittsweise mit der Zahnstange korrespondierende Laufflächen aufweist, die mit der jeweiligen Zahnstange bzw. Profilfläche zusammenwirken. Ein Linienkontakt wird beispielsweise durch einen zylindrischen Abschnitt an dem Schieber, insbesondere dem Pin, bewerkstelligt, und ein Funckontakt kann beispielsweise durch eine entsprechend gekrümmte Ausgestaltung entweder der mindestens einen Zahnstange und oder des Schiebers, insbesondere des Pins, bewerkstelligt werden.

Eine Weiterbildung der vorliegenden Erfindung sieht vor, dass das mindestens eine Kompensationsmittel eine Randschicht umfasst, die auf der mindestens einen Zahnstange und/oder auf dem mindestens einen Schieber angeordnet ist. Die Randschicht kann aus einem weicheren Werkstoff ausgebildet werden, wobei zur Spielkompensation vorzugsweise die Zahnflanken der jeweiligen Zahnstange mit der Randschicht ummantelt werden. Dadurch können auch Fertigungs- oder Montagetoleranzen zwischen den einzelnen Kontaktflächen der Schieber und der Zahnstangen kompensiert werden. Darüber hinaus kann es vorteilhaft sein, wenn die Randschicht verbesserte Gleiteigenschaften aufweist, wodurch einerseits die Gleitreibung zwischen dem Schieber und der jeweiligen Zahnstange reduziert werden kann und andererseits die Geräuschentwicklung positiv beeinflusst werden kann. Beispielsweise kann die Randschicht aus PTFE hergestellt sein.

Auch ist es denkbar, die mindestens eine Randschicht auf dem Schieber auszubilden. Insbesondere ist es bevorzugt, wenn der Pin mit der Randschicht überzogen ist. Ferner kann es vorteilhaft sein, wenn mindestens eine der mindestens zwei Schieber ebenfalls eine Randschicht in dem Bereich aufweist, in dem die mechanische Kopplung zwischen der Antriebswelle unter dem jeweiligen Schieber erfolgt. Durch die Randschicht kann auch die Kopplung zwischen dem jeweiligen Schieber oder der Antriebswelle spielfrei ausgestaltet werden und auch dort können Toleranzen und/oder Verschleiß ausgeglichen werden.

Darüber hinaus bezieht sich die vorliegende Erfindung auf eine Längsverstelleinheit mit einem erfindungsgemäßen Linearantrieb.

Ein weiterer Aspekt der vorliegenden Erfindung betrifft ein Kraftfahrzeug mit wenigstens einem solchen erfindungsgemäßen Linearantrieb.

Nachfolgend wird unter Bezugnahme auf die begleitenden Zeichnungen ein erfindungsgemäßes Ausführungsbeispiel sowie Weiterbildungen der vorliegenden Erfindung im Detail beschrieben. Es zeigen:
- Figur 1: eine perspektivische Darstellung eines Linearantriebs mit einer durch eine Antriebseinrichtung angetriebenen Antriebswelle, vier Zahnstangen und zwei Schiebern, die derart mit der Antriebswelle gekoppelt sind, dass diese jeweils eine zyklische und zueinander phasenversetzte Bewegung im Verlauf einer Umdrehung der Antriebswelle vornehmen und sich dabei durch einen Wirkkontakt an der mindestens einen Zahnstange zum Erzeugen eines Vortriebes in einer Richtung der Längsachse abschieben,
- Figur 2: eine Schnittdarstellung der Figur 1,
- Figur 3: eine weitere Schnittdarstellung der Figur 1,
- Figur 4: eine stark vereinfachte, vergrößerte und schematische Darstellung des Linearantriebs 1 gemäß einem ersten Ausführungsbeispiel, wobei eine der zwei gegenüberliegenden Zahnstangen durch ein Kompensationsmittel quer zu der Längsachse gefedert und vorgespannt ist,
- Figur 5: ein zweites Ausführungsbeispiel, wobei auf den Zahnflanken der Zahnstangen eine Randschicht vorgesehen ist,
- Figur 6: ein drittes Ausführungsbeispiel und eine Detaildarstellung eines Pins eines Schiebers, wobei mindestens ein Pin einen Pinkörper und eine Ummantelung umfasst und wobei die Ummantelung durch das Kompensationsmittel vorgespannt ist,
- Figur 7: ein viertes Ausführungsbeispiel in Analogie zur Figur 6,
- Figur 8 6,: ein fünftes Ausführungsbeispiel in Analogie zur Figur
- Figur 9: ein sechstes Ausführungsbeispiel in Analogie zur Figur 6,
- Figur 10: ein siebtes Ausführungsbeispiel in Analogie zur Figur 6,
- Figur 11: eine stark vereinfachte Detaildarstellung eines achten Ausführungsbeispiels des Linearantriebs, wobei zwei gegenüberliegend angeordnete Zahnstangen eine Kulisse bilden, dessen Profilflächen zusammenlaufend ausgebildet sind, und wobei der Pin konisch ausgebildet ist,
- Figur 12: ein neuntes Ausführungsbeispiel in Analogie zur Figur 11,
- Figur 13: ein zehntes Ausführungsbeispiel, wobei der Schieber zwei Pins aufweist, und wobei der jeweilige Pin aus zwei Einzelpins gebildet ist, die durch das Kompensationsmittel vorgespannt sind, und
- Figur 14: ein elftes Ausführungsbeispiel, wobei das Kompensationsmittel zwei in der Längsachse aneinandergereihte Zahnstangen verbindet, und
- Figur 15: eine Detaildarstellung des Kompensationsmittels gemäß Figur 14.

Gleiche oder funktional gleiche Teile oder Merkmale werden in der nachfolgenden detaillierten Beschreibung der Figuren mit den gleichen Bezugszeichen gekennzeichnet. Darüber hinaus sind in den Figuren nicht alle gleichen oder funktional gleichen Teile oder Merkmale mit einer Bezugsziffer versehen.

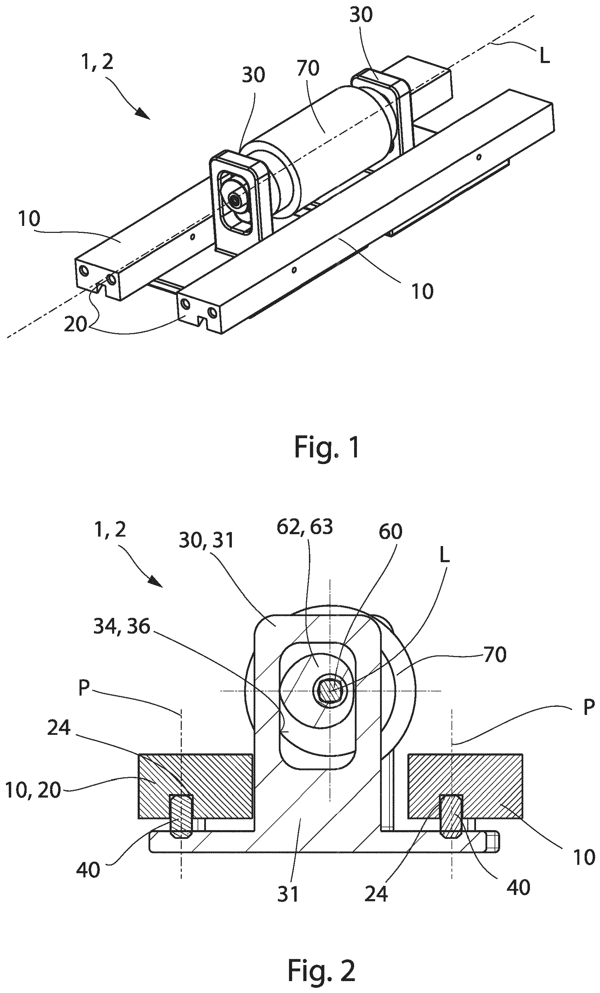

Figur 1 zeigt eine beispielhafte vereinfachte und perspektivisch dargestellte Ausgestaltung eines Linearantriebs 1, der beispielsweise in einer Längsverstelleinheit 2 für einen (nicht dargestellten) Sitz eines (nicht dargestellten) Kraftfahrzeuges verwendet werden kann.

Der Linearantrieb 1 gemäß Figur 1 umfasst eine Schiene 10, die entlang einer Längsachse L orientiert ist, mindestens zwei Schieber 30, die - wie in Fig. 2 gezeigt - quer zur Längsachse L beweglich sind. Ferner umfasst der Linearantrieb 1 mindestens eine antreibbare Antriebswelle 60, die in einer Drehachse X drehbar ist.

Die mindestens eine Schiene 10 ist entlang der Längsachse L orientiert, wobei beispielsweise die Längsachse L durch eine Fahrzeuglängsachse des Kraftfahrzeugs vorgegeben sein kann. Die Schiene 10 weist mindestens zwei Zahnstangen 20 auf, wobei darauf hingewiesen wird, dass im dargestellten Ausführungsbeispiel der Linearantrieb 1 zwei Schienen 10 mit jeweils zwei Zahnstangen 20 umfasst.

Gemäß den Figuren 1 bis 3 sind jeweils zwei Zahnstangen 20 auf einer Schiene 10 derart gegenüberliegend angeordnet, dass zwischen den mindestens zwei Zahnstangen 20 eine Kulisse 24 gebildet ist, in die mindestens einer der mindestens zwei Schieber 30 eingreift und im Verlauf der zyklischen Bewegung sich abwechselnd an zwei gegenüberliegend angeordneten Zahnstangen 20 abschieben kann. Die Kulisse 24 kann nach Art einer Nut ausgebildet sein und umfasst zwei gegenüberliegende Profilflächen 25, 26, welche durch die gegenüberliegenden zwei Zahnstangen 20 gebildet werden.

Die beiden Zahnstangen 20 spannen vorzugsweise eine Schienenebene E auf, welche parallel zu der Längsachse L orientiert ist.

Die als Nut oder Durchbrechung ausgebildete Kulisse 24 erstreckt sich in Richtung des Normalenvektors in die Schiene 10.

Die Kulisse 24 weist bevorzugt eine konstante Kulissentiefe auf.

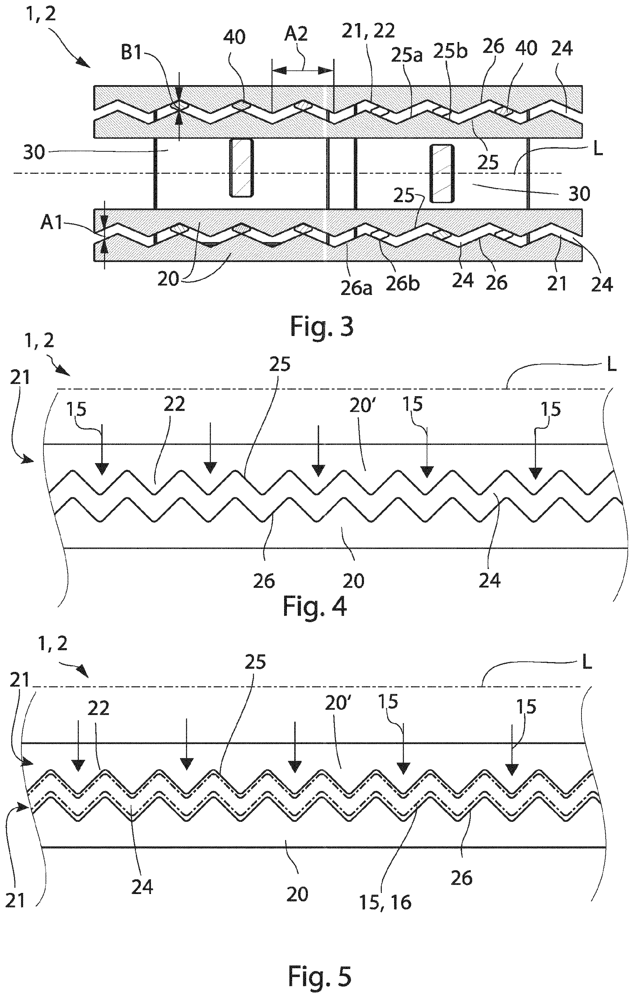

Die Kulisse 24 gemäß der Detaildarstellung in Figur 3 umfasst die zwei gegenüberliegenden Profilflächen 25, 26, die sich in einem bleibenden Abstand A1 zur Ausbildung eines Zahnprofils 21 mit einer Mehrzahl von Zähnen 22 zickzack- oder wellenförmig erstecken.

Die Zähne 22 weisen symmetrische Flanken 25a, 25b, 26a, 26b auf, die sich beidseitig zwischen Zahnspitze und Zahngrund erstrecken. Zwei benachbarte Zahnspitzen sind in einem Zahnabstand A2 angeordnet, bzw. die Länge eines Zahns 22 in der Längsachse entspricht dem Zahnabstand A2.

Das Zahnprofil 21 kann, wie unter anderem den Figuren 1 und 2 entnommen werden kann, sich entlang der Längsachse L vollständig über die Schiene 10 erstrecken.

Das Ausführungsbeispiel gemäß den begleitenden Figuren zeigt mindestens zwei Schieber 30, wobei an dieser Stelle angemerkt wird, dass bereits ein einziger Schieber 30 ausreicht, um einen Vortrieb in eine Richtung L1 oder L2 der Längsachse L zu erzeugen.

Die zwei Schieber 30 eines Linearantriebs 1 können, wie in dem Ausführungsbeispiel gemäß den Figuren 1-3 dargestellt ist, im Wesentlichen baugleich sein und können entweder in der Längsachse auf gegenüberliegenden Seiten der Antriebseinrichtung angeordnet sein oder in einer nicht dargestellten Ausführungsform auf einer einzigen Seite der Antriebseinrichtung.

Der jeweilige Schieber 30 ist mit der antreibbaren Antriebswelle 60 derart trieblich gekoppelt, dass der jeweilige Schieber 30 mindestens eine zyklische Bewegung im Verlauf einer Umdrehung der Antriebswelle 60 vornimmt.

Der Schieber 30 kann eine Durchbrechung oder Ausnehmung im ausgebildeten Kontaktbereich 34 aufweisen. Der Kontaktbereich 34 erstreckt sich bevorzugt in der Drehachse X und kann eine Breite B2 und eine Höhe H2 aufweisen.

Zum Erzeugen des Vortriebs in einer Richtung der Längsachse L greift der Schieber 30 in die Kulisse 24 der Schiene 10. Hierzu kann der Schieber 30 eine Lauffläche 45 umfassen, die eingerichtet ist, in Wirkkontakt mit den gegenüberliegenden Profilflächen 25, 26 zu stehen.

Wie in Figur 3 erkennbar ist, kann die Lauffläche 45 auf einem Pin 40 ausgebildet sein, der von einem Grundkörper 31 des Schiebers 30 quer zu der Längsachse L und senkrecht zu der Schienenebene E in die Kulisse 24 in einer Pinachse P greift.

Der jeweilige Schieber 30 kann mehrere Pins 40 aufweisen, wobei ein Abstand A3 zwischen zwei Pins 40 in der Längsachse eines Schiebers 30 dem Abstand A1 entspricht.

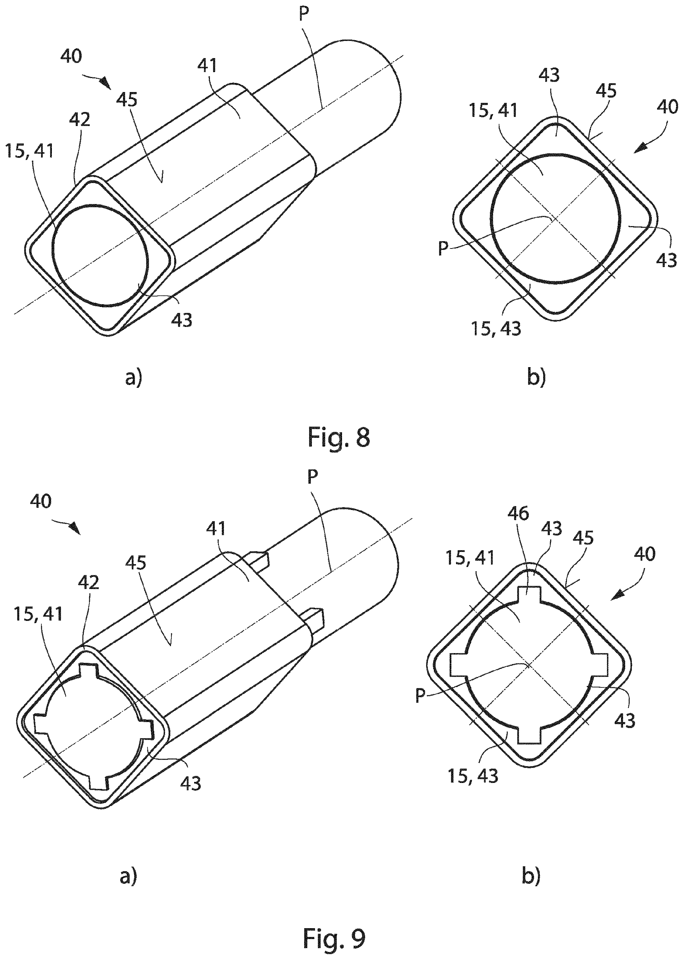

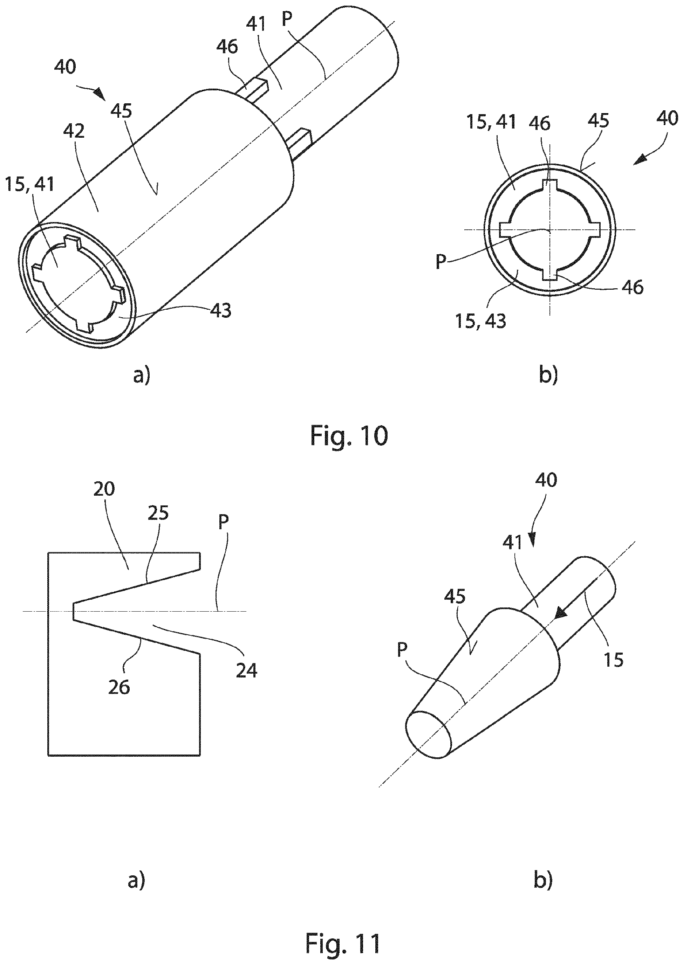

Der Pin 40 kann einen quaderförmigen, rautenförmigen (siehe Figuren 3 bis 7) oder einen runden (siehe Figuren 9 und 10) Querschnitt aufweisen und kann integral mit dem Grundkörper 31 ausgebildet sein oder an dem Grundkörper 31 des Schiebers 30 befestigt, insbesondere eingesetzt oder eingepresst, sein.

Wie Figur 3 entnommen werden kann, weist der Pin 40 eine Breite B1 auf, die quer zu der Längsachse L gemessen wird. Bevorzugt entspricht die Breite B1 näherungsweise dem Abstand A1 der zwei Profilflächen 25, 26, also B1 ≈ A1.

Die Lauffläche 45 kann eine Oberfläche mit verbesserten Reibeigenschaften aufweisen, um die Reibung zwischen der Kulisse 24 und dem Schieber 30 zu reduzieren.

Der Schieber 30, insbesondere der mindestens eine Pin 40 des Schiebers 30, ist in der Längsachse L zwischen zwei gegenüberliegenden Profilflächen 25, 26 bevorzugt formschlüssig gehalten. Der Formschluss in der Längsachse L zwischen dem Schieber 30 und der Kulisse 24 kann eine ungewünschte Bewegung oder einen Freilauf des Linearantriebs 1 blockieren.

Die Kopplung zwischen der Antriebswelle 60 und dem jeweiligen Schieber 30 kann auf unterschiedliche Weise erfolgen, wobei gemäß den hier vorgestellten Ausführungsbeispielen die Kopplung durch Führungsmittel 62 erfolgen kann, die mit dem Schieber 30, insbesondere mit dem Kontaktbereich 34 zusammenwirken. Der Schieber 30 kann in dem Kontaktbereich 34 mindestens eine Kontaktfläche 36 aufweisen, die mit dem Führungsmittel 62 zusammenwirkt.

Das Führungsmittel 62 kann beispielsweise, wie in den begleitenden Figuren 1-3 dargestellt ist, als eine Nockenwellenscheibe 63 einer Kurbelwelle oder Nockenwelle ausgebildet sein, und in die Durchbrechung oder Ausnehmung des Schiebers 30 greifen und dort mit dem Kontaktbereich 34 zusammenwirken.

Die Antriebswelle 60 ist durch eine Antriebeinrichtung 70 antreibbar, wobei die Antriebeinrichtung 70 bevorzugt ein elektrischer Antrieb ist, der noch weiter bevorzugt über ein (nicht dargestelltes) Getriebe mit der Antriebswelle 60 gekoppelt ist.

Das Führungsmittel 62 bzw. die Nockenwellenscheibe 63 kann als im Wesentlichen herzförmig ausgebildet beschrieben werden.

Das Führungsmittel 62 bzw. die Nockenwellenscheibe 63 weist eine Lauffläche 64 auf, die in der Umlaufrichtung in einem Abstand zu einer Drehachse X der Antriebswelle 60 ausgebildet ist. Der Abstand zwischen der Lauffläche 64 und der Drehachse X ändert sich in der Umlaufrichtung und zwar derart, dass der Abstand in mindestens einer ersten Hälfte vorwiegend linear in einer Umlaufrichtung zunimmt und in mindestens einer zweiten Hälfte in der Umlaufrichtung linear abnimmt. Die Lauffläche 64 verläuft in der jeweiligen Hälfte näherungsweise spiralförmig, wobei die Lauffläche 64 bevorzugt derart ausgebildet ist, dass der Abstand zwischen zwei diametralen Seiten, gemessen über die Drehachse X, näherungsweise konstant ist.

Durch die triebliche Kopplung des mindestens einen Schiebers 30 mit der Antriebswelle 60 wird der jeweilige Schieber 30 mindestens in eine lineare und quer zu der Längsachse zyklische Bewegung im Verlauf einer Umdrehung der Antriebswelle 60 versetzt, wobei die zyklische Bewegung des jeweiligen Schiebers 30 in der Schienenebene E oder parallel zu der Schienenebene E erfolgt. Der Doppelpfeil in Figur 3 soll die zyklische Bewegung in der Schienenebene E oder parallel zu der Schienenebene E des Schiebers 30 verdeutlichen.

Bei der zyklischen Bewegung des mindestens einen Schiebers 30 schiebt sich der Schieber 30 zum Erzeugen des Vortriebs in der Längsachse L abwechselnd an den gegenüberliegenden Profilflächen 25, 26 ab. Anders ausgedrückt, bewegt sich der Schieber 30 bei mindestens einer Umdrehung der Antriebswelle 60 um die Drehachse X quer zu der Längsachse L.

Ein vollständiger Zyklus der Bewegung umfasst ausgehend von einer Ausgangslage eine Bewegung in einer ersten Richtung Y1 und einen Wechsel der Bewegung in eine zweite Richtung Y2 an einem Wendepunkt. Die Bewegung in der zweiten Richtung Y2 wird bis zum nächsten Wendepunkt fortgesetzt. Anschließend erfolgt eine Rückkehr in die Ausgangslage.

Figur 4 zeigt die schematische Darstellung eines beispielhaft ausgestalteten Linearantriebs 1 mit einem Kompensationsmittel 15, durch welches Spiel und/oder Verschleiß ausgeglichen werden können bzw. kann.

Das Kompensationsmittel 15 kann in dem dargestellten Ausführungsbeispiel durch (nicht im Detail dargestellte) elastische Federmittel gebildet werden, durch welche eine der zwei Zahnstangen 20 gegen die jeweils andere und gegenüber angeordnete Zahnstange 20 vorgespannt ist. Zur Veranschaulichung ist das Kompensationsmittel 15 mittel Pfeillinien dargestellt.

Zum besseren Verständnis sind die Zahnstangen in Figur 4 mit dem Bezugszeichen 20 und 20' gekennzeichnet, wobei die Zahnstange 20 fest angeordnet ist, beispielsweise fest auf der (nicht dargestellten) Schiene 10, und die andere Zahnstange 20' ist quer zu der Längsachse L durch das Kompensationsmittel 15 gegen die Zahnstange 20 vorgespannt.

Durch die Vorspannung der Zahnstange 20' zur fest montierten Zahnstange 20 wird der Pin 40 in der Kulisse 24 fixiert und das Spiel bzw. und/oder der Verschleiß kann ausgeglichen werden.

Für die Zahnstange 20' können (nicht dargestellte) Endanschläge vorgesehen werden, durch die die maximale Verschiebung der Zahnstange 20' quer zu der Längsachse L durch das Kompensationsmittel 15 begrenzt wird. Die Endanschläge sollen verhindern, dass eine Profilüberdeckung zwischen den zwei Zahnstangen 20, 20' zu gering wird.

Ein zweites Ausführungsbeispiel eines Linearantriebs 1 mit einem Kompensationsmittel 15 kann Figur 5 entnommen werden. Das mindestens eine Kompensationsmittel 15 kann eine Randschicht 16 umfassen, die auf der mindestens einen Zahnstange 20 und/oder auf dem mindestens einen Schieber 30, insbesondere auf dessen Lauffläche(n) 45, angeordnet ist. Die Randschicht 16 kann aus einem weicheren Werkstoff ausgebildet werden, wobei zur Spielkompensation vorzugsweise die Profilflächen 25, 26 der jeweiligen Zahnstange 20 mit der Randschicht 16 ummantelt werden. Darüber hinaus kann es vorteilhaft sein, wenn die Randschicht 16 verbesserte Gleiteigenschaften aufweist, wodurch darüber hinaus die Gleitreibung und/oder die Geräuschentwicklung zwischen dem Schieber 30 bzw. dessen Pins 40 und der jeweiligen Zahnstange 20 reduziert werden können bzw. kann. Wie in Figur 5 können die Kompenationsmittel 15 der einzelnen Ausführungsbeispiele kombiniert werden. Es kann beispielsweise eine Randschicht 16 und eine Vorspannung einer der Zahnstangen 20' quer zu der Längsachse L vorgesehen werden. Auch können diese Aufführungsbeispiele beliebig mit den im Nachfolgenden beschriebenen Ausführungsbeispielen kombiniert werden.

Gemäß einer nicht dargestellten Ausgestaltung des Linearantrieb 1 kann eine Randschicht 16 auf dem Führungsmittel 62 bzw. der Nockenwellenscheibe 63 und/oder auf dem Kontaktbereich 34 des Schiebers 30 angeordnet werden. Dadurch kann die mechanische Kopplung zwischen der Antriebswelle 60 und dem jeweiligen Schieber 30 näherungsweise spielfrei ausgestaltet werden und auch zwischen dem Führungsmittel 62 und dem Schieber 30 können Toleranzen und oder Verschleiß ausgeglichen werden.

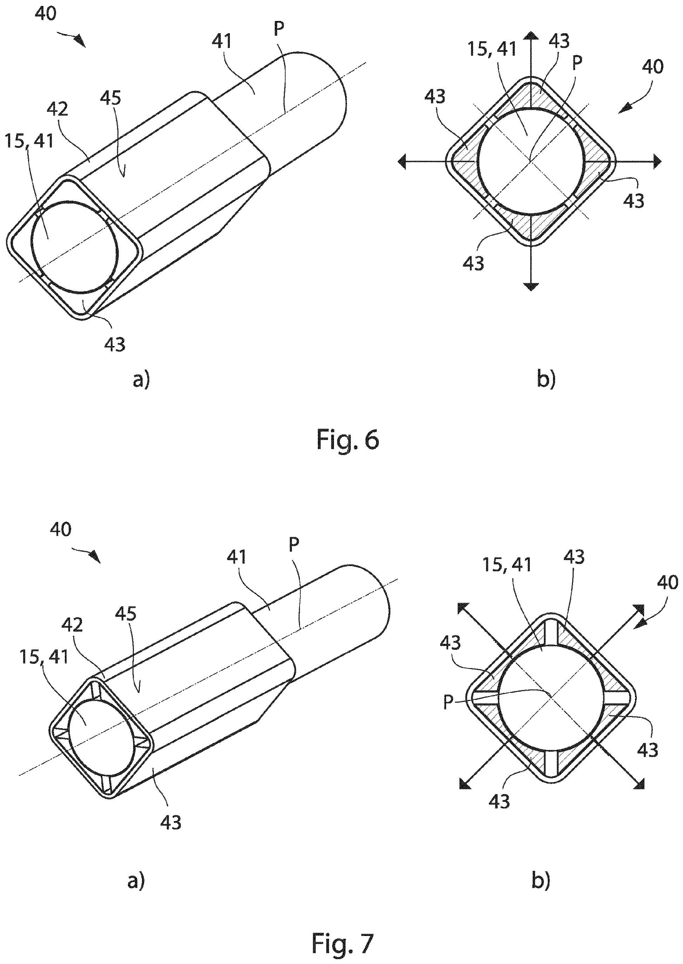

Figur 6 zeigt ein Kompensationsmittel 15 gemäß einem dritten Ausführungsbeispiel, wobei das Kompensationsmittel 15 an dem Pin 40 des mindestens einen Schiebers 30 angeordnet ist.

Die vergrößerte Detaildarstellung des Pins 40 gemäß den Figuren 6a und 6b kann entnommen werden, dass der jeweilige Pin 40 einen Pinkörper 41 und eine Ummantelung 42 umfasst. Ferner können Einzelsegmente 43 vorgesehen sein, über die die Ummantelung 42 an dem Pinkörper 41 abgestützt gehalten werden kann. Die Ummantelung 42 weist die Laufflächen 45 auf.

Der Pinkörper 41 kann wie dargestellt ein im Wesentlichen zylindrischer Körper sein. Die Ummantelung 42 kann eine rautenförmig Hülse, siehe Figuren 6-9 sein, in dessen Inneren der Pinkörper 41 angeordnet sein kann. Alternativ kann die Ummantelung 42 auch eine runde, insbesondere zylindrische oder kegelförmige, Außengeometrie gemäß Figur 10 aufweisen.

Das Kompensationsmittel 15 kann eine Vorspannung - angedeutet durch die Pfeile in Figur 6b - erzeugen, durch die die Einzelsegmente 43 gegen die Ummantelung 42 gedrückt werden. Beispielsweise kann das Kompensationsmittel 15 nach Art eines federgespannten Spreizankers ausgebildet sein.

Die Ummantelung 42 kann somit gegenüber dem Pinkörper 41 eine elastische Verschiebung erfahren, wodurch beispielsweise Verschleiß und/oder Toleranzen kompensiert werden können.

Die Einzelsegmente 43 können über dem Umfang des Pinkörpers 41 symmetrisch verteilt sein, wobei weiter bevorzugt mindestens zwei, vorzugsweise drei und noch weiter bevorzugt vier Einzelsegmente 43 vorgesehen sind.

Die Einzelsegmente 43 können das Kompensationsmittel 15 bilden und beispielsweise die Ummantelung 42 gegenüber dem Pinkörper 41 verspannen.

Die Figuren 7a und 7b zeigen ein viertes Ausführungsbeispiel, wobei im Gegensatz zu dem in den Figuren 6a und 6b dargestellten Pin 40 die Einzelsegmente 43 nicht in den Ecken der rautenförmigen Ummantelung 42 angeordnet sind, sondern zwischen den Seiten der rautenförmig in Ummantelung 42 und dem Pinkörper 41. Somit befinden sich die Einzelsegmente 43 im unmittelbaren Kraftpfad zwischen den Laufflächen 45 des Pins 40 und dem Pinkörper 41.

Die Figuren 8a und 8b zeigen ein fünftes Ausführungsbeispiel, wobei zwischen der Ummantelung 42 unter dem Pinkörper 41 ein einziges Einzelsegment 43 vorgesehen ist. Der Pinkörper 41 und/oder die Ummantelung 42 können aus einem belastbaren bzw. festen Material, wie beispielsweise Metall, hergestellt sein und das Einzelsegment 43 kann beispielsweise aus einer elastischen Zwischenmasse als Kompensationsmittel 15 gebildet sein, durch die die Ummantelung 42 gegenüber dem Pinkörper 41 gefedert und/oder gefedert und vorgespannt gehalten werden kann.

Wie in den Figuren 9a und 9b gezeigt ist, kann zwischen dem Pinkörper 41 und der Ummantelung 42 eine Verdrehsicherung vorgesehen sein, wodurch die Ummantelung 42 radial stabilisiert wird und eine Verdrehung der Ummantelung 42 gegenüber dem Pinkörper 41 gehemmt wird. Beispielsweise kann die Verdrehsicherung durch mindestens eine von dem Pinkörper 41 und/oder der Ummantelung 42 abstehende Rippe 46 gebildet werden, durch die eine drehmomentübertragene Verbindung zwischen dem mindestens einen Einzelsegment 43 gebildet werden kann. Durch die Verdrehsicherung kann eine Torsionsfederung gebildet werden, durch die eine gefederte Verdrehung zwischen dem Pinkörper 41 und der Ummantelung 42 zum Ausgleich von Toleranzen und/oder Spiel bewerkstelligt werden kann. Auch verhindert die Verdrehsicherung, dass sich die Verbindung zwischen dem Pinkörper 41 und dem Einzelsegment 43 und/oder zwischen der Ummantelung 42 und dem Einzelsegment 43 löst.

Figuren 10a und 10b zeigen ein weiteres Ausführungsbeispiel. Dieses Ausführungsbeispiel ist analog zu dem zuvor beschriebenen Ausführungsbeispiel in Figur 9 ausgebildet, jedoch ist die Ummantelung 42 nicht rautenförmig sondern zylinderförmig.

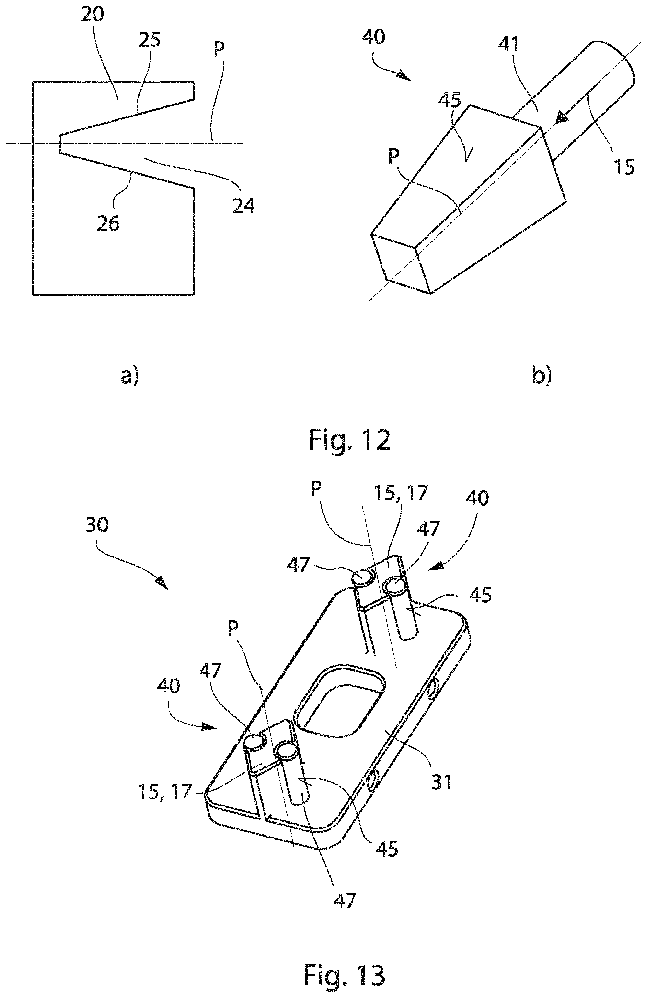

Erfindungsgemäße Ausführungsbeispiele sind in den Figuren 11 und 12 dargestellt, wobei die in den Figuren 11 und 12 dargestellten Ausführungsbeispiele gemeinsam haben, dass die die Kulisse 24 bildenden Profilflächen 25, 26 nicht parallel zueinander angeordnet sind. Die Kulisse 24 weist zusammenlaufende Profilflächen 25, 26 auf, wodurch sich die Kulissen in der Pinachse P verjüngt bzw. weitet.

Der jeweilige Pin 40 kann, wie in den Figuren 11b oder 12b dargestellt ist, eine mit den zusammenlaufenden Profilflächen 25, 26 korrespondierende konische (siehe Figur 11b) oder pyramidenförmige Form (siehe Figur 12b) aufweisen.

Das Kompensationsmittel 15 kann den jeweiligen Pin 40 in der Pinachse P in die Kulisse 24 schieben, wodurch ein Toleranzausgleich stattfinden kann.

An dieser Stelle wird angemerkt, dass die Form des Pins 40 nicht zwangsweise mit der Form der Profilflächen 25, 26 korrespondieren muss. Die dargestellten Ausführungsbeispiele zeigen lediglich eine beispielhafte Ausgestaltung, wobei zwischen dem jeweiligen Pin 40 und der Zahnstange 20 zur Erzeugung des Vortriebs der Wirkkontakt durch einen Flächenkontakt oder einen Linienkontakt bewerkstelligt wird. Allerdings kann der Wirkkontakt ebenso durch einen Punktkontakt erfolgen, indem beispielsweise der jeweilige Pin 40 eine konvexe Form aufweist. Auch kann ein solcher Punkt- oder Linienkontakt durch eine Kombination aus zusammenlaufenden Profilflächen 25, 26 mit nicht zusammenlaufenden Laufflächen des jeweiligen Schiebers 30 und vice versa bewerkstelligt werden.

Figur 13 zeigt eine vergrößerte Darstellung eines Schiebers 30, gemäß einem weiteren Ausführungsbeispiel. Der jeweilige Pin 40 umfasst zwei Einzelpins 47, die durch das Kompensationsmittel 15 gegeneinander vorgespannt sind. Wie der Figur 12 entnommen werden kann, kann ein als Zwischenmasse 17 ausgebildetes Kompensationsmittel 15 zwischen den beiden Einzelpins 47 angeordnet sein, wodurch die Vorspannung der Einzelpins 47 gegeneinander bewerkstelligt wird.

Die Vorspannung kann auch oder zusätzlich durch ein Kompensationsmittel 15 bereitgestellt werden, dass durch Übermaß beim Abstand zwischen den beiden Einzelpins 47 der Kontur der Kulisse 24 gebildet wird. Dadurch befindet sich stets ein Einzelpin 47 unter Spannung und wird innerhalb seiner elastischen Deformation nach innen gedrückt.

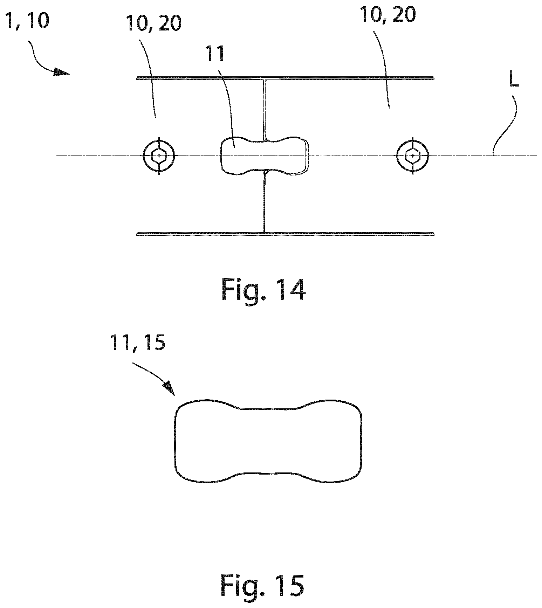

Ein letztes Ausführungsbeispiel wird in den Figuren 14 und 15 gezeigt, wobei der Linearantrieb 1 mehrere Zahnstangen 20 bzw. Schienen 10, 10' aufweist, die aneinander gereiht sind. Dadurch kann die Länge des Linearantriebes 1 beliebig verlängert werden.

Zwei in der Längsachse L benachbarte Schienen 10,10' oder aber auch Zahnstangen 20, können durch eine Art Schwalbenschwanzverbindung miteinander verbunden werden. Beispielweise kann zur Verbindung ein in Figur 15 gezeigter Nutenstein 11 verwendet werden, der das Kompensationsmittel 15 bilden kann. Das Kompensationsmittel ermöglich, dass mindestens eine der in der Längsachse L aneinandergereihten Zahnstangen 20 in der Längsachse verschoben werden kann. Dadurch kann eine der Zahnstangen 20 gegenüber der benachbarten Zahnstange 20 in der Längsachse zum Ausgleich von Toleranzen und oder Verschleiß eine Kompensationsbewegung durchführen.

### Bezugszeichenliste

- 1: Linearantrieb
- 2: Längsverstelleinheit
- 10: Schiene
- 15: Kompensationsmittel
- 16: Randschicht
- 17: Zwischenmasse
- 20: Zahnstange
- 21: Zahnprofil
- 22: Zahn
- 24: Kulisse
- 25: Profilfläche
- 26: Profilfläche
- 30: Schieber
- 31: Grundkörper
- 34: Kontaktbereich
- 36: Kontaktfläche
- 40: Pin
- 41: Pinkörper
- 42: Ummantelung
- 43: Einzelsegment
- 45: Lauffläche
- 46: Rippe
- 47: Einzelpin
- 60: Antriebswelle
- 62: Führungsmittel
- 63: Nockenwellenscheibe
- 64: Lauffläche
- 70: Antriebseinrichtung

- A1: Abstand von 25 und 26
- A2: Zahnabstand
- A3: Pinabstand
- B1: Breite von 40
- L: Längsachse
- P: Pinachse

## Patentansprüche

1. Linearantrieb (1), aufweisend
- mindestens eine entlang einer Längsachse (L) orientierte Zahnstange (20) und
- mindestens zwei Schieber (30), die quer zur Längsachse (L) beweglich sind, und
- eine Antriebswelle (60),
- wobei die mindestens zwei Schieber (30) derart mit der Antriebswelle (60) gekoppelt sind, dass die mindestens zwei Schieber (30) jeweils mindestens eine zyklische und zueinander phasenversetzte Bewegung im Verlauf einer Umdrehung der Antriebswelle (60) vornehmen und sich dabei durch einen Wirkkontakt an der mindestens einen Zahnstange (20) zum Erzeugen eines Vortriebes in einer Richtung der Längsachse (L) abschieben, und wobei der Linearantrieb (1) mindestens ein Kompensationsmittel (15) aufweist, durch welches der Wirkkontakt zwischen mindestens einem der mindestens zwei Schieber (30) und der mindestens einen Zahnstange (20) vorgespannt ist,
**dadurch gekennzeichnet, dass**
- mindestens zwei Zahnstangen (20) vorgesehen sind, und dass die mindestens zwei Zahnstangen (20) derart gegenüberliegend angeordnet sind, dass zwischen den mindestens zwei Zahnstangen (20) eine Kulisse (24) gebildet ist, in die mindestens einer der mindestens zwei Schieber (30) eingreift und im Verlauf der zyklischen Bewegung sich abwechselnd an den mindestens zwei Zahnstangen (20) abschieben kann, und
- die Kulisse (24) zwei gegenüberliegende und zusammenlaufende Profilflächen (25, 26) aufweist

2. Linearantrieb (1) nach Anspruch 1,
**dadurch gekennzeichnet, dass**
das mindestens eine Kompensationsmittel (15) mindestens einen der mindestens zwei Schieber (30) und/oder die mindestens eine Zahnstange (20) im Wesentlichen quer zu der Längsachse vorspannt.

3. Linearantrieb (1) nach Anspruch 1 oder 2,
**dadurch gekennzeichnet, dass**
eine der mindestens zwei Zahnstangen (20) gegen die gegenüberliegend angeordnete andere der mindestens zwei Zahnstangen (20) durch das mindestens eine Kompensationsmittel (15) gefedert vorspannt ist.

4. Linearantrieb (1) nach einem der vorgenannten Ansprüche,
**dadurch gekennzeichnet, dass**
der mindestens eine Schieber (30) mindestens einen Pin (40) umfasst, und dass der mindestens eine Schieber (30) über den mindestens eine Pin (40) in Wirkkontakt mit der mindestens einen Zahnstange (20) steht.

5. Linearantrieb (1) nach Anspruch 4,
**dadurch gekennzeichnet, dass**
der mindestens eine Pin (40) in jeweils einer Pinachse (P) in die Kulisse (24) ragt.

6. Linearantrieb (1) nach Anspruch 4 oder 5,
**dadurch gekennzeichnet, dass**
der mindestens eine Pin (40) mittels des mindestens einen Kompensationsmittels (15) in einer Ebene quer zu der zyklischen Bewegung des mindestens einen der mindestens zwei Schieber (30) vorgespannt wird und/oder dass der mindestens eine Pin (40) durch das mindestens eine Kompensationsmittel (15) in der Pinachse (P) vorgespannt ist.

7. Linearantrieb (1) nach einem der Ansprüche, 4 - 6,
**dadurch gekennzeichnet, dass**
der mindestens eine Pin (40) eine mit den zusammenlaufenden Profilflächen (25, 26) korrespondierende Form aufweist.

8. Linearantrieb (1) nach einem der Ansprüche 4 - 7,
**dadurch gekennzeichnet, dass**
der mindestens eine Pin (40) zumindest abschnittsweise pyramidenförmig oder konisch ist.

9. Linearantrieb (1) nach einem der Ansprüche 4 - 8,
**dadurch gekennzeichnet, dass**
der mindestens eine Pin (40) aus mindestens zwei Einzelpins (47) gebildet wird.

10. Linearantrieb (1) nach Anspruch 9,
**dadurch gekennzeichnet, dass**
zwischen den Einzelpins (47) das mindestens eine Kompensationsmittel (15) angeordnet ist, das die mindestens zwei Einzelpins (47) vorspannt.

11. -Linearantrieb (1) nach einem der vorgenannten Ansprüche,
**dadurch gekennzeichnet, dass**
das mindestens ein Kompensationsmittel (15) den mindestens einen der mindestens zwei Schieber (30) und/oder die mindestens eine Zahnstange (20) in der Orientierung der Längsachse (L) vorspannt.

12. -Linearantrieb (1) nach einem der vorgenannten Ansprüche,
**dadurch gekennzeichnet, dass**
der Wirkkontakt zwischen der mindestens einen Zahnstange (20) und mindestens einem der mindestens zwei Schieber (30) ein Flächenkontakt, ein Linienkontakt oder ein Punktkontakt ist.

13. Linearantrieb nach einem der vorgenannten Ansprüche,
**dadurch gekennzeichnet, dass**
das mindestens ein Kompensationsmittel (15) eine Randschicht (16) umfasst, die auf der mindestens einen Zahnstange (20) und/oder auf dem mindestens einem Schieber (30) angeordnet ist.

14. Längsverstelleinheit (2) aufweisend einen Linearantrieb (1) nach einem der vorgenannten Ansprüche.

15. Kraftfahrzeug aufweisend einen Linearantrieb (1) nach einem der Ansprüche 1 - 13.

## Claims

1. Linear drive (1), comprising
- at least one rack (20) oriented along a longitudinal axis (L), and
- at least two sliders (30) which are movable transversely to the longitudinal axis (L), and
- a drive shaft (60),
- wherein the at least two sliders (30) are coupled to the drive shaft (60) in such a manner that the at least two sliders (30) each perform at least one cyclic movement that is phase-shifted relative to one another over the course of one revolution of the drive shaft (60) and, in doing so, slide off the at least one rack (20) by means of an operative contact in order to generate a propulsive movement in a direction of the longitudinal axis (L), and
wherein the linear drive (1) comprises at least one compensation means (15) by which the operative contact between at least one of the at least two sliders (30) and the at least one rack (20) is preloaded,
**characterized in that**
- at least two racks (20) are provided, and that the at least two racks (20) are arranged opposite one another in such a manner that a guide slot (24) is formed between the at least two racks (20), into which at least one of the at least two sliders (30) engages and, over the course of the cyclic movement, can alternately slide off the at least two racks (20), and
- the guide slot (24) comprises two opposite and converging profile surfaces (25, 26).

2. Linear drive (1) according to claim 1,
**characterized in that**
the at least one compensation means (15) preloads at least one of the at least two sliders (30) and/or the at least one rack (20) substantially transversely to the longitudinal axis.

3. Linear drive (1) according to claim 1 or 2,
**characterized in that**
one of the at least two racks (20) is resiliently preloaded against the oppositely arranged other of the at least two racks (20) by the at least one compensation means (15).

4. Linear drive (1) according to one of the preceding claims,
**characterized in that**
the at least one slider (30) comprises at least one pin (40), and that the at least one slider (30) is in operative contact with the at least one rack (20) via the at least one pin (40).

5. Linear drive (1) according to claim 4,
**characterized in that**
the at least one pin (40) projects into the guide slot (24) in each case along a pin axis (P).

6. Linear drive (1) according to claim 4 or 5,
**characterized in that**
the at least one pin (40) is preloaded by means of the at least one compensation means (15) in a plane transversely to the cyclic movement of the at least one of the at least two sliders (30) and/or that the at least one pin (40) is preloaded by the at least one compensation means (15) along the pin axis (P).

7. Linear drive (1) according to one of claims 4 to 6,
**characterized in that**
the at least one pin (40) has a shape corresponding to the converging profile surfaces (25, 26).

8. Linear drive (1) according to one of claims 4 to 7,
**characterized in that**
the at least one pin (40) is at least partially pyramidal or conical in shape.

9. Linear drive (1) according to one of claims 4 to 8,
**characterized in that**
the at least one pin (40) is formed from at least two individual pins (47).

10. Linear drive (1) according to claim 9,
**characterized in that**
the at least one compensation means (15) is arranged between the individual pins (47) and preloads the at least two individual pins (47).

11. Linear drive (1) according to one of the preceding claims,
**characterized in that**
the at least one compensation means (15) preloads the at least one of the at least two sliders (30) and/or the at least one rack (20) in the orientation of the longitudinal axis (L).

12. Linear drive (1) according to one of the preceding claims,
**characterized in that**
the operative contact between the at least one rack (20) and at least one of the at least two sliders (30) is a surface contact, a line contact, or a point contact.

13. Linear drive according to one of the preceding claims,
**characterized in that**
the at least one compensation means (15) comprises a surface layer (16) which is arranged on the at least one rack (20) and/or on the at least one slider (30).

14. Longitudinal adjustment unit (2) comprising a linear drive according to one of the preceding claims.

15. Motor vehicle comprising a linear drive (1) according to one of claims 1 to 13.

## Revendications

1. Entraînement (1) linéaire comportant
- au moins une crémaillère (20) orientée suivant un axe (L) longitudinal et
- au moins deux coulisseaux (30), qui sont mobiles transversalement à l'axe (L) longitudinal, et
- un arbre (60) d'entraînement,
- dans lequel au moins les deux coulisseaux (30) sont accouplés à l'arbre (60) d'entraînement de manière à ce qu'au moins les deux coulisseaux (30) effectuent respectivement au moins un mouvement cyclique et déphasé l'un par rapport à l'autre au cours d'une rotation de l'arbre (60) d'entraînement et ainsi, par un contact actif avec la au moins une crémaillère (20), coulisse pour la production d'une avance dans la direction de l'axe (L) longitudinal, et
dans lequel l'entraînement (1) linéaire a au moins un moyen (15) de compensation, par lequel le contact actif entre au moins l'un des deux coulisseaux (30) et la au moins une crémaillère (20) est précontraint,
**caractérisé en ce qu'**
- il est prévu au moins deux crémaillères (20) et **en ce que** les au moins deux crémaillères (20) sont disposées l'une en face de l'autre de manière à former, entre les au moins deux crémaillères (20), une coulisse (24), dans laquelle au moins l'un des deux coulisseaux (30) pénètre et peut, au cours du mouvement cyclique, coulisser en alternance sur les au moins deux crémaillères (20), et
- la coulisse (24) a deux surfaces (25, 26) profilées, opposées, convergentes.

2. Entraînement (1) linéaire suivant la revendication 1,
**caractérisé en ce que**
le au moins un moyen (15) de compensation précontraint au moins l'un des au moins deux coulisseaux (30) et/ou la au moins une crémaillère (20), sensiblement transversalement à l'axe longitudinal.

3. Entraînement (1) linéaire suivant la revendication 1 ou 2,
**caractérisé en ce que**
l'une des au moins deux crémaillères (20) est précontrainte de manière élastique par le au moins un moyen (15) de compensation sur l'autre, disposée de manière opposée, des au moins deux crémaillères (20).

4. Entraînement (1) linéaire suivant l'une des revendications précédentes,
**caractérisé en ce que**
au moins un coulisseau (30) comprend au moins un ergot (40) et **en ce qu'**au moins un coulisseau (30) est, par au moins un ergot (40), en contact actif avec la au moins une crémaillère (20).

5. Entraînement (1) linéaire suivant la revendication 4,
**caractérisé en ce que**
au moins un ergot (40) pénètre dans la coulisse (24) suivant respectivement un axe (P) de l'ergot.

6. Entraînement (1) linéaire suivant la revendication 4 ou 5,
**caractérisé en ce que** l'
on précontraint le au moins un ergot (40) au moyen au moins d'un moyen (15) de compensation dans un plan transversalement au déplacement cyclique du au moins l'un des au moins deux coulisseaux (30) et/ou **en ce que** le au moins un ergot (40) est précontraint dans l'axe (P) de l'ergot par au moins un moyen (15) de compensation.

7. Entraînement (1) linéaire suivant l'une des revendications 4 à 6,
**caractérisé en ce que**
le au moins un ergot (40) a une forme correspondant aux surfaces (25, 26) profilées, convergentes.

8. Entraînement (1) linéaire suivant l'une des revendications 4 à 7,
**caractérisé en ce que**
le au moins un ergot (40) est au moins par endroit de forme pyramidale ou conique.

9. Entraînement (1) linéaire suivant l'une des revendications 4 à 8,
**caractérisé en ce que** l'
on forme au moins un ergot (40) à partir d'au moins deux ergots (47) individuels.

10. Entraînement (1) linéaire suivant la revendication 9,
**caractérisé en ce que**
entre les ergots (47) individuels est disposé au moins un moyen (15) de compensation, qui précontraint les au moins deux ergots (47) individuels.

11. Entraînement (1) linéaire suivant l'une des revendications précédentes,
**caractérisé en ce que**
le au moins un moyen (15) de compensation précontraint le au moins l'un des au moins deux coulisseaux (30) et/ou la au moins une crémaillère (20) dans l'orientation de l'axe (L) longitudinal.

12. Entraînement (1) linéaire suivant l'une des revendications précédentes,
**caractérisé en ce que**
le contact d'action entre la au moins une crémaillère (20) et au moins l'un des au moins deux coulisseaux (30) est un contact de surface, un contact linéaire ou un contact ponctuel.

13. Entraînement linéaire suivant l'une des revendications précédentes,
**caractérisé en ce que**
au moins un moyen (15) de compensation comprend une couche (16) de bord, qui est disposée sur au moins une crémaillère (20) et/ou sur au moins un coulisseau (30).

14. Unité (2) réglable en longueur comportant un entraînement (1) linéaire suivant l'une des revendications précédentes.

15. Véhicule automobile comportant un entraînement (1) linéaire suivant l'une des revendications 1 à 13.
